# FASCICULE DE BREVET EUROPEEN

(11) **EP 4 336 068 B1**
(45) Date de publication et mention de la délivrance du brevet: **14.05.2025**
(21) Numéro de dépôt: 23194959.5
(22) Date de dépôt: 01.09.2023
(51) Int. Cl.: F16H 1/28, F02C 7/36, F16H 57/08

(54) **PORTE-SATELLITES POUR UN RÉDUCTEUR DE VITESSE D'UNE TURBOMACHINE D'AÉRONEF**
PLANETENTRÄGER FÜR EIN REDUZIERGETRIEBE EINER FLUGZEUGTURBOMASCHINE
PLANET CARRIER FOR A SPEED REDUCER OF AN AIRCRAFT TURBINE ENGINE

(30) Priorité: 09.09.2022 FR 2209058
(43) Date de publication de la demande: 13.03.2024
(73) Titulaire: Safran Transmission Systems, 92700 Colombes (FR)
(72) Inventeur: MOULY, Guillaume Pierre, 77550 MOISSY-CRAMAYEL (FR); BECK, Guillaume Julien, 77550 MOISSY-CRAMAYEL (FR); PTASZYNSKI, Patrice Julien, 77550 MOISSY-CRAMAYEL (FR); SEREY, Jean-Pierre, 77550 MOISSY-CRAMAYEL (FR); SIMON, Adrien Louis, 77550 MOISSY-CRAMAYEL (FR)
(74) Mandataire: Gevers & Orès

(56) Documents cités:
- EP-A1- 1 945 970
- EP-A1- 4 108 899
- EP-A1- 4 108 900
- DE-U1- 202018 102 232
- US-A- 5 466 198

## Description

### Domaine technique de l'invention

La présente invention concerne notamment un porte-satellites pour un réducteur de vitesse d'une turbomachine d'aéronef.

### Aval-plan technique

L'état de l'art comprend notamment les documents FR-A1-2 987 416, FR-A1-2 853 382, FR-A1-3 041 054, FR-A1-3 052 213, FR-A1-3 073 915, FR-A1-3 084 428, US-A-5,466,198, DE-U1-20 208 102232, EP-A1-4 108 899, EP-A1- 4 108 900 et EP-A1- 1 945 970.

Le rôle d'un réducteur mécanique est via un mécanisme de transmission de modifier le rapport de vitesse et le couple entre un arbre d'entrée et un arbre de sortie du mécanisme d'entrainement.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal de la turbomachine. Les satellites ont chacun un axe de révolution différent et sont équirépartis sur le même diamètre de fonctionnement autour de l'axe des planétaires. Ces axes sont parallèles à l'axe longitudinal de la turbomachine.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- sur un réducteur planétaire, le porte-satellites est fixe et la couronne constitue l'arbre de sortie du dispositif qui tourne dans le sens inverse du solaire.
- sur un réducteur épicycloïdal, la couronne est fixe et le porte-satellites constitue l'arbre de sortie du dispositif qui tourne dans le même sens que le solaire.
- sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champ magnétique. Il existe plusieurs types d'engrènement par contact comme avec des dentures droites ou en chevron.

Le porte-satellites peut être monobloc ou se présenter sous la forme d'une cage et d'un porte-cage. Le principe de ce deuxième type de porte-satellites à cage et porte-cage est de maintenir la cage dans son plan de symétrie afin d'équilibrer la récupération des efforts de part et d'autre de chaque satellite. La cage comprend une cavité interne dans laquelle sont logés le solaire, les satellites et les paliers de guidage de ces satellites. Le solaire comprend des cannelures internes d'accouplement à un premier arbre de la turbomachine et le porte-cage comprend une portion tubulaire comportant des cannelures externes d'accouplement à un autre arbre.

La liaison de la cage au porte-cage est en général rigide. En variante, on peut envisager une technologie dans laquelle la cage est reliée au porte-cage par des liaisons « souples », telles que décrites dans le document FR-A1-2 853 382. Dans un tel cas, le porte-cage comprend une rangée annulaire de doigts axiaux qui portent des premiers éléments de liaison. Ces premiers éléments de liaison coopèrent avec des seconds éléments de liaison montés dans des logements de la cage pour former les liaisons souples entre le porte-cage et la cage, qui autorisent au moins un ou deux degrés de liberté.

On a déjà proposé de réaliser ces liaisons souples avec des rotules, les doigts portant des rotules traversées par des broches cylindriques s'étendant dans les logements de la cage.

Le montage des satellites dans la cage n'est parfois pas réalisable ni par l'intérieur ni par l'extérieur de la cage, imposant alors de découper la cage en plusieurs pièces afin de monter les satellites avant de réassembler les pièces de la cage.

Sous charge, les pièces de la cage récupèrent chacune une partie de la charge. Le mode d'assemblage des pièces de la cage doit permettre la transmission de cette charge jusqu'aux liaisons avec le porte-cage, et aussi la résistance à cette charge. Par ailleurs, les paliers de guidage des satellites sont portés par la cage et doivent être parfaitement positionnés après l'assemblage des pièces afin de garantir un bon fonctionnement du réducteur.

L'état de l'art comprend en outre les documents US-A-5,466,198 et DE-U1-20 2018 102232. Dans le document US-A-5,466,198, le porte-satellites comprend une cage dont les parois sont reliées par des pontets. La cage comprend deux parties comportant chacune une paroi et une moitié des pontets. Le plan de liaison de ces parties est un plan médian de la cage et du porte-satellites, c'est-à-dire un plan qui est situé au milieu de la cage et passe au milieu des satellites et du solaire.

La présente invention propose un perfectionnement qui apporte une solution simple, efficace et économique à au moins une partie des problèmes évoqués ci-dessus.

### Résumé de l'invention

L'invention concerne un porte-satellites pour un réducteur de vitesse d'une turbomachine d'aéronef, ce porte-satellites comportant :
- un porte-cage d'axe principal et comportant une portion d'accouplement centrée sur cet axe et qui présente des doigts axiaux de support de cage répartis autour de l'axe,
- une cage centrée sur l'axe et comportant deux parois annulaires radiales reliées l'une à l'autre par des pontets répartis autour de l'axe, les pontets étant situés à la périphérie externe des parois et délimitant avec les parois une cavité interne de la cage, les pontets comportant ou définissant des logements axiaux dans lesquels sont montés les doigts, les doigts étant reliés aux pontets par des liaisons autorisant au moins un degré de liberté, l'une des parois comportant des ouvertures traversantes axialement qui sont alignées axialement avec des ouvertures traversantes axialement de l'autre des parois,

caractérisé en ce que la cage comprend deux pièces :
   - une première pièce comportant l'une des parois et les pontets, ces pontets étant en saillie axiale sur une face de cette paroi et comportant des premières extrémités axiales reliées à cette face et des secondes extrémités axiales libres, et
   - une seconde pièce comportant l'autre des parois, cette paroi comportant une face sur laquelle sont appliquées les extrémités libres des pontets,
et en ce que les deux pièces de la cage sont fixées entre elles par des moyens de fixation qui traversent la paroi de la seconde pièce et sont insérés dans des trous de fixation des pontets.

La fixation des pièces de la cage du porte-satellites est donc réalisée par bridage des pontets de l'une des pièces directement à l'autre des pièces dans la mesure où la seconde pièce peut être considérée comme formant ou comportant une bride de fixation aux pontets de la première pièce. Cette fixation permet la transmission des charges en fonctionnement. Les moyens de fixation des pièces de la cage sont avantageusement dimensionnés pour résister à cette transmission de charge.

Les ouvertures de montage des paliers des satellites sont alignées axialement avec précision et le mode de fixation des pièces de la cage permet de garantir ce bon positionnement et ainsi le bon fonctionnement du réducteur.

Le fait que les pontets soient portés par l'une des parois et non pas divisés en deux moitiés portées respectivement par les deux parois, est particulièrement avantageux pour plusieurs raisons. Tout d'abord, chacun des pontets est formé d'une seule pièce et d'un seul bloc, ce qui garantit son intégrité et sa tenue mécanique en fonctionnement. Par ailleurs, le plan de liaison des parties de la cage et donc le plan de transmission des efforts entre ces parties, est déporté sur un côté de la cage, ce qui risque moins de pénaliser le fonctionnement du réducteur et en particulier d'altérer l'engrènement des satellites en fonctionnement. De plus, cela permet aux trous de fixation formés dans les pontets d'être éventuellement taraudés pour recevoir directement les moyens de fixation par vissage (sans besoin d'écrous). Ceci n'est pas possible dans la technique antérieure du fait que les moitié de pontets n'ont pas forcément une longueur suffisante pour le taraudage de leurs trous de fixation.

La présente invention est compatible
- d'un réducteur à simple étage ou à plusieurs étages ;
- d'un réducteur planétaire, épicycloïdal ou différentiel ;
- de dentures droites, hélicoïdales ou en chevron ;
- de tout type de paliers de satellites, qu'ils soient composés d'éléments roulants, de paliers hydrodynamiques, etc.

Le porte-satellites selon l'invention peut comprendre les caractéristiques suivantes, prises en combinaison selon les revendications dépendantes:
- au moins l'une des pièces de la cage comprend des organes de centrage de l'autre des pièces, afin d'assurer un centrage des pièces l'une par rapport à l'autre et sur l'axe ;
- les organes de centrage comprennent des rebords incurvés qui sont portés par l'une des pièces et qui s'étendent autour de l'axe, ces rebords incurvés coopérant avec des surfaces incurvées de l'autre des pièces ;
- les rebords incurvés sont des protubérances qui s'étendent axialement en saillie ;
- la première pièce comprend des organes de centrage qui sont situés sur les extrémités libres des pontets, à leurs extrémités radialement internes et/ou externes ;
- la seconde pièce comprend des organes de centrage qui sont situés sur ladite face de sa paroi ;
- l'extrémité libre de chacun des pontets comprend une face d'appui sur la face précitée de la paroi de la seconde pièce, le logement de chaque pontet débouchant sur cette face d'appui, et lesdits orifices de fixation des pontets étant répartis autour du débouché de ce logement ;
- la paroi de la seconde pièce comprend des trous axiaux qui traversent la paroi et sont alignés avec les logements des pontets, la paroi de la seconde pièce comportant des orifices axiaux qui sont traversés par lesdits moyens de fixation et qui sont répartis autour de ces trous ;
- la première pièce est située du côté de la portion d'accouplement du porte-cage ;
   -- lesdits rebords incurvés sont aptes à coopérer par glissement axial ou appui radial avec les surfaces incurvées;
- les moyens de fixation sont des vis et les trous de fixation sont taraudés pour recevoir par vissage les vis.

L'invention concerne également un réducteur de vitesse pour une turbomachine d'aéronef, ce réducteur ayant un axe principal et comportant :
- un porte-satellites tel que décrit ci-dessus,
- un solaire qui s'étend dans la cavité interne de la cage et qui est centré sur l'axe,
- des satellites disposés dans la cavité interne autour de l'axe et du solaire et engrenés avec le solaire, ces satellites étant centrés et guidés par des paliers dont des extrémités axiales sont montées dans les ouvertures précitées des parois, et
- une couronne disposée autour de l'axe et de la cage et engrenée avec les satellites.

L'invention concerne en outre une turbomachine, en particulier d'aéronef, comportant un réducteur tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une vue schématique en coupe axiale d'une turbomachine utilisant l'invention ;

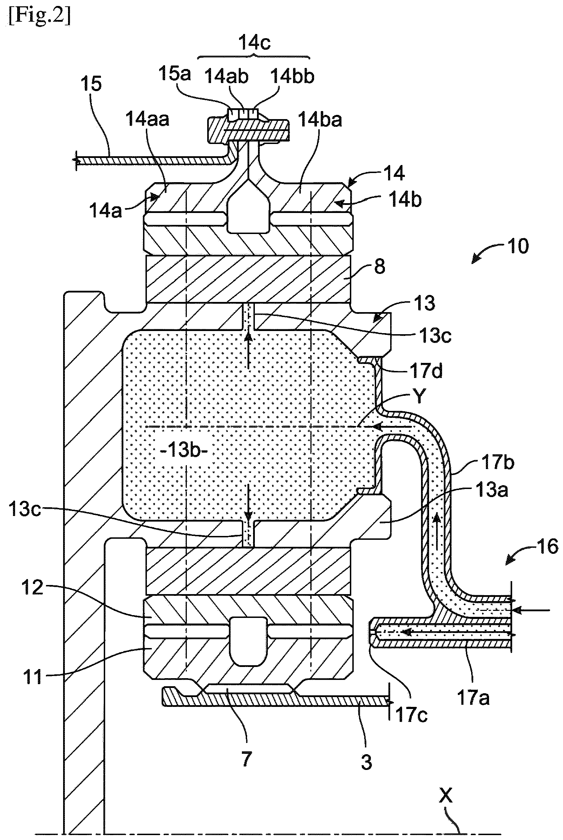

[Fig. 2] la figure 2 est une vue schématique en coupe axiale d'un réducteur à train épicycloïdal ;
[Fig. 3] la figure 3 est une vue schématique en perspective d'une cage d'un porte-satellites de réducteur ;
[Fig. 4] la figure 4 est une vue schématique en coupe axiale d'une cage et d'un porte-cage de porte-satellites ;
[Fig. 5] la figure 5 est une vue de détail de la figure 4 ;
[Fig. 6] la figure 6 est une vue schématique partielle similaire à celle de la figure 5 et illustrant un premier mode de réalisation d'un porte-satellites selon l'invention ;
[Fig. 7] la figure 7 est une vue schématique en perspective éclatée du porte-satellites de la figure 6 ;
[Fig. 8] la figure 8 est une vue schématique en perspective d'une des pièces d'un porte-satellites selon une variante de réalisation de l'invention ;
[Fig. 9] la figure 9 est une vue schématique en perspective de l'autre des pièces du porte-satellites selon la même variante de réalisation.

### Description détaillée de l'invention

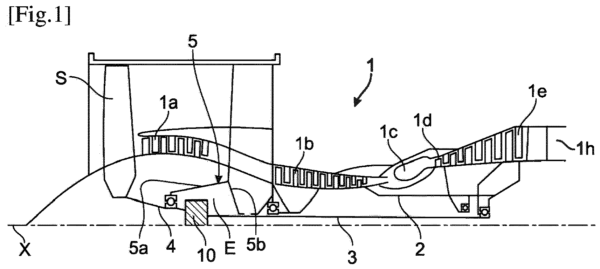

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est relié à l'arbre BP 3 au moyen d'un réducteur 10. Ce réducteur est généralement de type planétaire ou épicycloïdal.

Bien que la description qui suit concerne un réducteur du type planétaire ou épicycloïdal, elle s'applique également à un différentiel mécanique dans lequel ses trois composants essentiels, que sont le porte-satellites, la couronne et le solaire, sont mobiles en rotation, la vitesse de rotation de l'un de ces composants dépendant notamment de la différence de vitesses des deux autres composants.

Le réducteur 10 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 10. Cette enceinte E est ici fermée en amont par des joints au niveau d'un palier permettant la traversée de l'arbre de soufflante 4, et en aval par des joints au niveau de la traversée de l'arbre BP 3.

La figure 1 montre une partie d'un réducteur 10 qui peut prendre la forme de différentes architectures selon si certaines pièces sont fixes ou en rotation. En entrée, le réducteur 10 est relié à l'arbre BP 3, par exemple par l'intermédiaire de cannelures 7. Ainsi, l'arbre BP 3 entraîne un pignon planétaire appelé le solaire 11. Classiquement, le solaire 11 dont l'axe de rotation est confondu avec l'axe X de la turbomachine 1, entraîne une série de pignons appelés satellites 12, qui sont équirépartis sur le même diamètre autour de l'axe de rotation X. Ce diamètre est égal au double de l'entraxe de fonctionnement entre solaire 11 et satellites 12. Le nombre de satellites 12 est généralement défini entre trois et sept pour ce type d'application.

L'ensemble des satellites 12 est maintenus par un châssis appelé porte-satellites 13. Chaque satellite 12 tourne autour de son propre axe Y, et engrène avec la couronne 14.

En sortie du réducteur 10, nous avons :
o dans une configuration épicycloïdale, l'ensemble des satellites 12 entraine en rotation le porte-satellite 13 autour de l'axe X de la turbomachine. La couronne 14 est fixée au carter moteur ou stator 5 via un porte-couronne 15 et le porte-satellites 13 est fixé à l'arbre de soufflante 4.
∘ dans une configuration planétaire, l'ensemble des satellites 12 est maintenu par un porte-satellites 13 qui est fixé au carter moteur ou stator 5. Chaque satellite 12 entraine la couronne 14 qui est reliée à l'arbre de soufflante 4 via un porte-couronne 15.

Chaque satellite 12 est monté libre en rotation à l'aide d'un palier 8, par exemple de type à roulement ou hydrodynamique. Chaque palier 8 est monté sur un des axes 13a du porte-satellites 13 et tous les axes sont positionnés les uns par rapport aux autres à l'aide d'un ou plusieurs châssis structurels du porte-satellites 13. Il existe un nombre d'axes et de paliers égal au nombre de satellites 12.

Dans l'exemple représenté, la couronne 14 est séparée en deux demi-couronnes et comprend :
o une demi-couronne avant 14a constituée d'une jante 14aa et d'une demi-bride de fixation 14ab. Sur la jante 14aa se trouve l'hélice avant de la denture du réducteur. Cette hélice avant engrène avec celle du satellite 12 qui engrène avec celle du solaire 11.
o une demi-couronne arrière 14b constituée d'une jante 14ba et d'une demi-bride de fixation 14bb. Sur la jante 14ba se trouve l'hélice arrière de la denture du réducteur. Cette hélice arrière engrène avec celle du satellite 12 qui engrène avec celle du solaire 11.

La demi-bride de fixation 14ab de la couronne avant 14a et la demi-bride de fixation 14bb de la couronne arrière 14b forment la bride de fixation 14c de la couronne. La couronne 14 est fixée au porte-couronne 15 en assemblant la bride de fixation 14c de la couronne et la bride de fixation 15a du porte-couronne à l'aide d'un montage boulonné par exemple.

Les flèches de la figure 1 décrivent l'acheminement d'huile dans le réducteur 10. L'huile arrive dans le réducteur 10 depuis la partie stator 5 dans le distributeur 16 par différents moyens qui ne seront pas précisés dans cette vue car ils sont spécifiques à un ou plusieurs types d'architecture. Le distributeur 16 est séparé en deux parties en général chacune répétée du même nombre de satellites. Les injecteurs 17a ont pour fonction de lubrifier les dentures, et les bras 17b ont pour fonction de lubrifier les paliers 8. L'huile est amenée vers l'injecteur 17a pour ressortir par l'extrémité 17c afin de lubrifier les dentures. L'huile est également amenée vers chaque bras 17b et circule via la bouche d'alimentation 17d du palier 8. L'huile circule ensuite à travers l'axe 13a dans une ou des zones tampons 13b pour ensuite ressortir par des orifices 13c afin de lubrifier les paliers 8 des satellites.

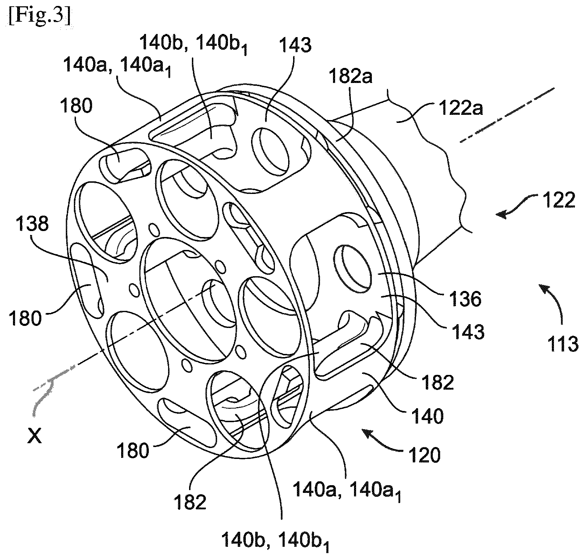

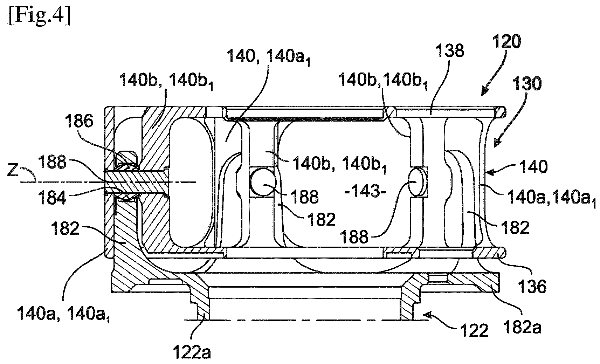

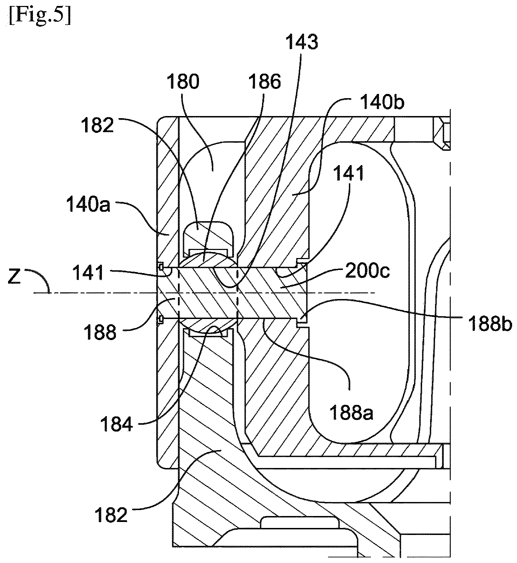

Dans les figures 3 à 5, les éléments déjà décrits dans ce qui précède sont désignés par les mêmes références augmentés d'une centaine.

Les figures 3 à 5 représentent une technologie particulière de porte-satellites 113, ce porte-satellites comportant une cage 120 et un porte-cage 122 reliés par des liaisons souples ici à rotules.

La cage 120 comprend deux parois annulaires radiales 136, 138 qui sont parallèles entre elles et perpendiculaires à l'axe X, ainsi qu'une paroi cylindrique 140 qui s'étend entre les périphéries externes de ces parois 136, 138.

La paroi cylindrique 140 est ici du type à double peau et comprend une peau externe 140a interrompue par les lumières 143 et une peau interne 140b interrompue par les mêmes lumières 143. Dans l'exemple représenté qui n'est pas limitatif, la peau externe 140a séparée par cinq lumières 143 forme cinq pontets extérieurs ou externes 140a1, et la peau interne 140b séparée par cinq lumières 143 forme cinq pontets intérieurs ou internes 140b1. Chaque paire ou couple de pontets interne et externe 140a1, 140b1 forment une chape pour accueillir un des doigts 182 du porte-cage 122. Autrement dit, les pontets 140a1, 140b1 de chaque couple définissent entre eux un logement 180 de réception d'un doigt 182 du porte-cage 122. Les pontets 140a1, 140b1 de chaque paire sont alignés radialement et définissent entre eux ce logement.

En variante, la paroi cylindrique 140 pourrait être à simple peau et chacun des pontets 140a1, 140b1 pourrait être creusé pour former un desdits logements 180.

Les pontets 140a1, 140b1 assurent la liaison structurelle entre les parois 136 et 138. Les logements 180 débouchent sur les parois 136 et 138, les doigts 182 étant engagés dans les logements 180 par les débouchés de la paroi 136 dans l'exemple représenté.

La cage 120 comprend ainsi une rangée annulaire de logements 180. Ces logements 180 reçoivent les doigts axiaux 182 solidaires d'une paroi annulaire 182a sensiblement radiale du porte-cage 122. La paroi 182a est située à une extrémité axiale du porte-cage 122. Le porte-cage 122 comprend une portion tubulaire 122a qui comprend des moyens d'accouplement à un arbre, et par exemple à l'arbre de soufflante 4. Ces moyens d'accouplement non représentés sont par exemples des cannelures externes.

Les doigts 182 s'étendent axialement depuis la paroi 182a et sont engagés par translation axiale dans les logements 180. Chaque doigt 182 comprend, sensiblement en son milieu, une bague 184 de montage de la rotule 186 destinée à être traversée par une broche cylindrique 188 portée par la cage 120.

La bague 184 a une orientation sensiblement radiale par rapport à l'axe X. Elle a une forme générale cylindrique. La cage 120 et la rotule 186 ont une épaisseur, mesurée dans une direction radiale par rapport à l'axe X, qui est inférieure à la distance inter-pontets ou l'épaisseur radiale de la lumière oblongue 180, de façon à pouvoir être engagées dans ce logement concomitamment avec le doigt 182 de support de ces pièces.

Chaque logement 180 est traversé par une broche 188 qui a une orientation sensiblement radiale par rapport à l'axe X. Chaque broche 188 comporte un corps cylindrique 188a relié à une extrémité axiale, ici radialement interne, à une collerette annulaire externe 188b. La broche 188 est ici engagée par translation radiale depuis l'intérieur à travers des orifices radiaux 141, 143 des pontets 140a1, 140b1 et de la rotule 186, sa collerette 188b étant destinée à venir en appui radial sur le pontet extérieur 140a1 de la cage 120 dans l'exemple représenté. Après insertion de la broche 188 dans les orifices des pontets, jusqu'à mise en appui de la collerette 188b sur le pontet extérieur 140a1, la collerette 188b est fixée à ce pontet par exemple par vissage.

Les parois 136, 138 définissent entre elles et avec les pontets 140a1, 140b1 une cavité interne de la cage qui est configurée pour recevoir le solaire et les satellites du réducteur.

Au niveau de leurs centres, les parois 136, 138 comprennent des ouvertures 190 alignées sur l'axe pour le montage du solaire. Autour de cette ouverture 190, chacune des parois 136, 138 comprend des ouvertures 192 de montage des extrémités des paliers de guidage des satellites qui sont insérées dans la cavité par les lumières 143.

Le montage du solaire et des satellites dans une cage monobloc de porte-satellites telle que représentée aux figures 3 à 5 n'est pas toujours possible et l'invention apporte une solution à ce problème avec une cage de porte-satellites qui est formée par l'assemblage de deux pièces.

Dans la description qui suit, les éléments déjà décrits dans ce qui précède sont désignés par les mêmes références augmentés d'une autre centaine.

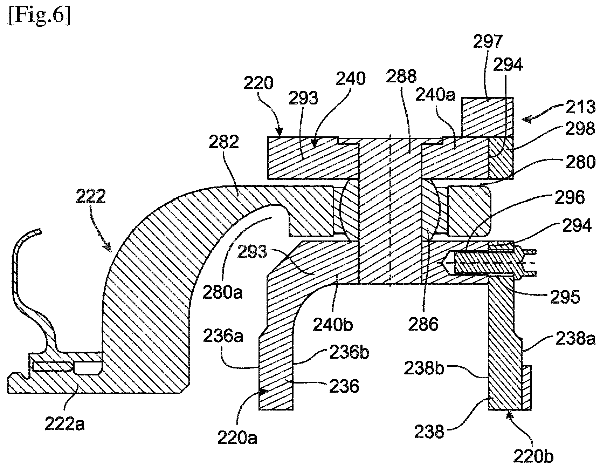

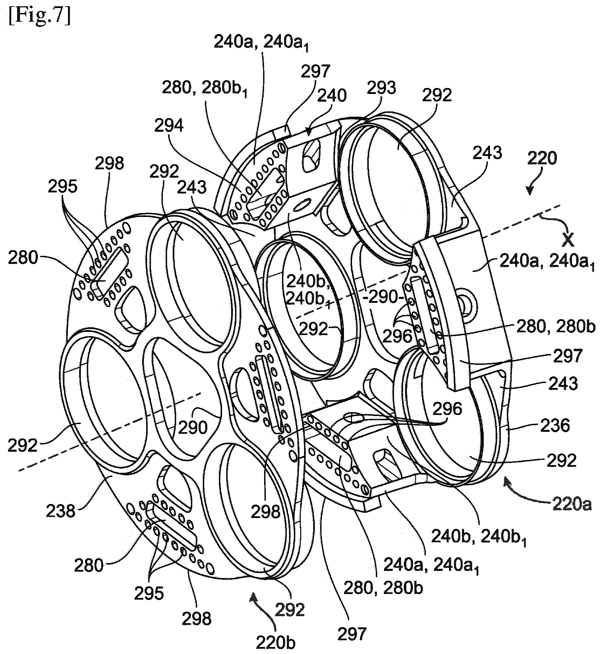

Les figures 6 et 7 montrent un mode de réalisation d'une cage 220 et de ses pièces 220a, 220b pour un porte-satellites 213 selon l'invention. La figure 6 montre en partie ce porte-satellites 213 qui fait partie d'un réducteur de vitesse pour une turbomachine d'aéronef.

La description qui précède, relative à la turbomachine 1, au réducteur 10, et au porte-satellites 113 s'appliquent au porte-satellites 213 et au réducteur de la présente invention.

Le porte-satellites 213 comprend une cage 220 et un porte-cage 222 reliés par des liaisons qui autorisent au moins un ou deux degrés de liberté et qui sont par exemple des liaisons à rotules, comme évoqué dans ce qui précède. Le porte-cage 222 est similaire au porte-cage 112 décrit dans ce qui précède et en diffère par exemple par le nombre de ses doigts 282 qui est de trois dans le cas du porte-cage 222, contre cinq dans le cas du porte-cage 122.

Les liaisons à broches 288 et rotules 286 peuvent être similaires à celles décrites dans ce qui précède.

Le porte-cage 222 comprend une portion tubulaire 222a qui comprend des moyens d'accouplement à un arbre, et par exemple à l'arbre de soufflante 4. Ces moyens d'accouplement non représentés sont par exemple des cannelures externes.

La cage 220 comprend deux parois annulaires radiales 236, 238 qui sont parallèles entre elles et perpendiculaires à l'axe X, ainsi qu'une paroi cylindrique 240 qui s'étend entre les périphéries externes de ces parois 236, 238.

La paroi cylindrique 240 est ici du type à double peau et comprend une peau externe 240a interrompue par les lumières 243 et une peau interne 240b interrompue par les mêmes lumières 243. Dans l'exemple représenté qui n'est pas limitatif, la peau externe 240a séparée par trois lumières 243 forme trois pontets extérieurs ou externes 240a1, et la peau interne 240b séparée par trois lumières 243 forme trois pontets intérieurs ou internes 240b1. Chaque paire ou couple de pontets interne et externe 240a1, 240b1 forment une chape pour accueillir un des doigts 282 du porte-cage 222. Autrement dit, les pontets 240a1, 240b1 de chaque couple définissent entre eux un logement 280 de réception d'un doigt 282 du porte-cage 222.

En variante et comme évoqué dans ce qui précède, la paroi cylindrique 240 pourrait être du type à simple peau et les logements 280 seraient alors creusés ou formés dans les pontets.

Les pontets assurent la liaison structurelle entre les parois 236 et 238. Des lumières de forme allongée ou oblongue sont réalisées dans ou entre les pontets 240a1, 240b1 pour recevoir les doigts 282.

La paroi 236 située du côté du porte-cage 222 comprend une face latérale externe 236a et une face latérale interne 236b qui fait face à l'autre paroi 238. Cette autre paroi 238 comprend une face latérale interne 238b qui fait face à la paroi 236, et une face latérale externe 238a. Les logements 280 traversent axialement la cage 220 et débouchent sur les faces 236a, 238a. Les parois 236, 238 comportent des ouvertures 290 traversantes axialement qui sont alignées axialement entre elles et sur l'axe X.

Les parois 236, 238 comportent des ouvertures 292 traversantes axialement qui sont alignées axialement avec des ouvertures 292 traversantes axialement de l'autre des parois. Ces ouvertures 292 sont réparties autour de l'axe X et sont destinées à recevoir les extrémités axiales des paliers (non représentés) de guidage des satellites du réducteur, qui peuvent être des paliers lisses ou des paliers à roulement par exemple.

Comme cela est clairement visible aux figures 6 et 7, la cage 220 comprend une première pièce 220a et une seconde pièce 220b qui sont fixées ensemble par bridage.

La première pièce 220a comporte la paroi 236 et les pontets 240a1, 240b1, et en particulier l'intégralité des pontets. Ces pontets 240a1, 240b1 sont en saillie axiale sur la face 236b de la paroi 236 et comportent des premières extrémités axiales 293 reliées à cette face et des secondes extrémités axiales 294 libres.

La seconde pièce 220b comporte la paroi 238 dont la face 238b est appliquée axialement sur les extrémités libres 294 des pontets 240a1, 240b1.

Les extrémités libres 294 des pontets 240a1, 240b1 comprennent chacun une face radiale sur laquelle débouchent les logements 280. Ces faces des pontets 240a1, 240b1 comprennent ainsi des débouchés 280b des logements 280. Ces logements 280 sont en partie formés dans la paroi 236 qui comprend à cet effet des ouvertures 280a traversantes alignées avec les débouchés des logements 280. Les formes et dimensions transversales des ouvertures 280a sont donc similaires à celles des logements 280.

Les moyens de fixation sont des vis 299 qui sont visibles à la figure 6. Les vis sont montées à travers des orifices 295 traversants de la paroi 238, du côté de la face 238a, et sont vissées dans des trous taraudés 296 des extrémités libres 294 des pontets 240a1, 240b1.

Comme on le voit dans les dessins, les orifices 295 sont répartis autour des ouvertures 280b. Leur nombre est compris entre 5 et 30 par paire de pontets 240a1, 240b1 et de préférence entre 10 et 20 par pontet. Une partie des orifices 295 est située radialement à l'extérieur des débouchés 280b et une autre partie des orifices 295 est située radialement à l'intérieur de ces débouchés 280b.

De la même façon, les trous taraudés 296 sont répartis autour des ouvertures 280a formées dans la paroi a. Leur nombre est égal au nombre des orifices 295.

On constate également que le plan de liaison des pièces 220a, 220b est déporté par rapport au plan médian de la cage 220 qui passe au niveau des axes des broches 288.

De préférence, les trous taraudés 296 s'étendent depuis les extrémités libres 294 des pontets jusqu'avant ce plan médian, comme visible à la figure 6.

Lors du montage de la cage 220, les pièces 220a, 220b sont rapprochées axialement l'une sur l'autre jusqu'à ce qu'elles soient en appui l'une sur l'autre. Les orifices 295 de la pièce 220b doivent être alignés avec les orifices 294 taraudés de la pièce 220a. Pour garantir un centrage précis des pièces 220a, 220b l'une par rapport à l'autre, au moins l'une des pièces peut comprendre des organes de centrage configurés pour coopérer avec l'autre des pièces.

De préférence, les organes de centrage comprennent des rebords incurvés 297 qui sont portés par l'une des pièces et qui s'étendent autour de l'axe X, ces rebords incurvés 297 étant configurés pour coopérer avec des surfaces incurvées 298 de l'autre des pièces.

Dans l'exemple représenté aux figures 6 et 7, les rebords incurvés 297 sont portés par la pièce 220a et sont des protubérances qui s'étendent axialement en saillie au niveau des extrémités libres 294 des pontets 240a1, 240b1, et plus particulièrement au niveau des extrémités radialement externes des pontets externes 240a1.

Chacun des pontets externe 240b1 comprend ainsi un rebord incurvé 297 en saillie orienté axialement du côté de l'autre pièce 220b. Chacun de ces rebords 297 est destiné à coopérer par glissement axial avec une surface 298 complémentaire de la pièce 220b et de sa paroi 238.

Dans l'exemple représenté, chacun des rebords 297 a une étendue angulaire autour de l'axe X comprise entre 20 et 70°, et de préférence entre 30 et 50°. Chacune des surfaces 298 a une étendue angulaire autour de l'axe X comprise entre 20 et 70°, et de préférence entre 30 et 50°.

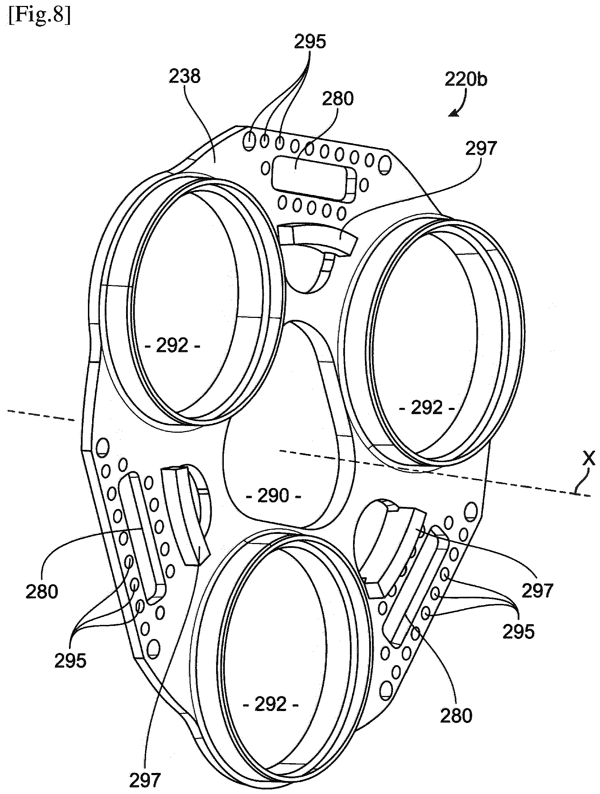

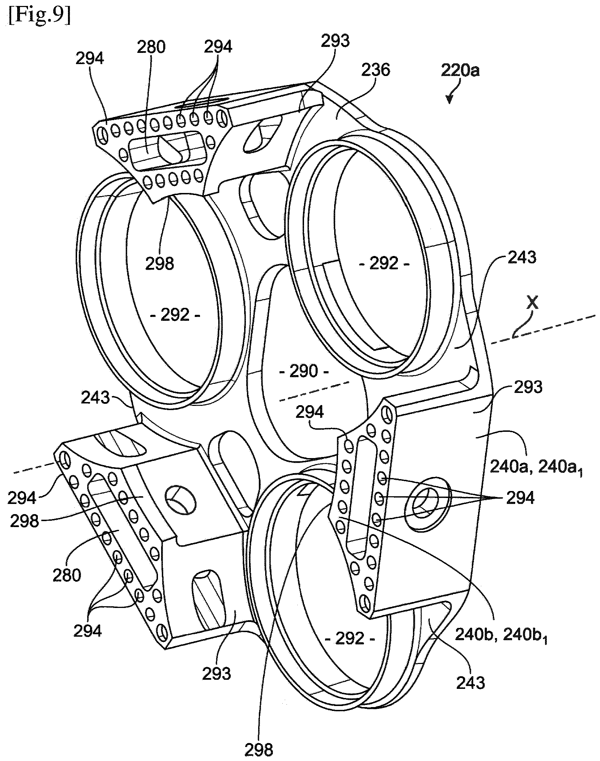

Dans la variante de réalisation représentée aux figures 8 et 9, les rebords incurvés 297 sont portés par la pièce 220b et sont en saillie sur sa face 238b.

Ces rebords 297 sont destinés à coopérer par glissement axial avec des surfaces 298 complémentaires des extrémités libres 294 des pontets 240a1, 240b1, et plus particulièrement au niveau des extrémités radialement internes des pontets internes 240b1.

Dans l'exemple représenté, chacun des rebords 297 a une étendue angulaire autour de l'axe X comprise entre 10 et 60°, et de préférence entre 20 et 40°. Chacune des surfaces 298 a une étendue angulaire autour de l'axe X comprise entre 10 et 60°, et de préférence entre 20 et 40°.

En fonctionnement, les rebords incurvés 297 sont configurés pour coopérer par appui radial avec les surfaces incurvées 298 pour permettre si besoin une partie de la transmission d'efforts en direction radiale entre les pièces 220a, 220b. Une majeure partie de ces efforts est transmise par l'intermédiaire des vis 299.

Dans encore une autre variante non représentée, des organes de centrage pourraient être portées par les deux pièces 220a, 220b ou au moins une des pièces de la cage 220 pourrait comprendre deux types de rebords 297 tels que ceux des variantes de réalisation des figures 6, 7 et 8, 9.

## Revendications

1. Porte-satellites (213) pour un réducteur de vitesse (10) d'une turbomachine (1) d'aéronef, ce porte-satellites (213) comportant :
- un porte-cage (222) d'axe (X) principal et comportant une portion d'accouplement (222a) centrée sur cet axe (X) et qui présente des doigts axiaux (282) de support de cage répartis autour de l'axe (X),
- une cage (220) centrée sur l'axe (X) et comportant deux parois annulaires radiales (236, 238) reliées l'une à l'autre par des pontets (240a1, 240b1) répartis autour de l'axe (X), les pontets (240a1, 240b1) étant situés à la périphérie externe des parois (236, 238) et délimitant avec les parois (236, 238) une cavité interne de la cage (220), les pontets (240a1, 240b1) comportant ou définissant des logements axiaux (280) dans lesquels sont montés les doigts (282), les doigts (282) étant reliés aux pontets (240a1, 240b1) par des liaisons autorisant au moins un degré de liberté, l'une des parois (236) comportant des ouvertures traversantes (292) axialement qui sont alignées axialement avec des ouvertures traversantes (292) axialement de l'autre des parois,
**caractérisé en ce que** la cage (220) comprend deux pièces (220a, 220b) :
- une première pièce (220a) comportant l'une des parois (236) et les pontets (240a1, 240b1), ces pontets (240a1, 240b1) étant en saillie axiale sur une face (236a) de cette paroi (236) et comportant des premières extrémités axiales (293) reliées à cette face (236a) et des secondes extrémités axiales libres (294), et
- une seconde pièce (220b) comportant l'autre des parois (238), cette paroi (238) comportant une face (238a) sur laquelle sont appliquées les extrémités libres (294) des pontets (240a1, 240b1),
et **en ce que** les deux pièces (220a, 220b) de la cage (220) sont fixées entre elles par des moyens de fixation (299) qui traversent la paroi (238) de la seconde pièce (220b) et sont insérés dans des trous de fixation (296) des pontets (240a1, 240b1).

2. Porte-satellites (213) selon la revendication 1, dans lequel au moins l'une des pièces (220a, 220b) de la cage (220) comprend des organes de centrage de l'autre des pièces, afin d'assurer un centrage des pièces l'une par rapport à l'autre et sur l'axe (X).

3. Porte-satellites (213) selon la revendication 2, dans lequel les organes de centrage comprennent des rebords incurvés (297) qui sont portés par l'une des pièces (220a, 220b) et qui s'étendent autour de l'axe (X), ces rebords incurvés (297) coopérant avec des surfaces incurvées (298) de l'autre des pièces.

4. Porte-satellites (213) selon la revendication 3, dans lequel les rebords incurvés (297) sont des protubérances qui s'étendent axialement en saillie.

5. Porte-satellites (213) selon la revendication 3 ou 4, dans lequel lesdits rebords incurvés (297) sont aptes à coopérer par glissement axial ou appui radial avec les surfaces incurvées.

6. Porte-satellites (213) selon l'une des revendications 2 à 5, dans lequel la première pièce (220a) comprend des organes de centrage qui sont situés sur les extrémités libres (294) des pontets (240a1, 240b1), à leurs extrémités radialement internes et/ou externes.

7. Porte-satellites (213) selon l'une des revendications 2 à 6, dans lequel la seconde pièce (220b) comprend des organes de centrage qui sont situés sur ladite face (238b) de sa paroi (238).

8. Porte-satellites (213) selon l'une des revendications précédentes, dans lequel l'extrémité libre (294) de chacun des pontets (240a1, 240b1) comprend une face d'appui sur la face (238b) précitée de la paroi (238) de la seconde pièce (220b), le logement (280) de chaque pontet (240a1, 240b1) débouchant sur cette face d'appui, et lesdits orifices de fixation (296) des pontets (240a1, 240b1) étant répartis autour du débouché de ce logement (280).

9. Porte-satellites (213) selon l'une des revendications précédentes, dans lequel la paroi (238) de la seconde pièce (220b) comprend des trous axiaux qui traversent la paroi (238) et sont alignés avec les logements (280) des pontets (240a1, 240b1), la paroi (238) de la seconde pièce (220b) comportant des orifices axiaux (295) qui sont traversés par les moyens de fixation (299) et qui sont répartis autour de ces trous.

10. Porte-satellites (213) selon l'une des revendications précédentes, dans lequel la première pièce (220a) est située du côté de la portion d'accouplement (222a) du porte-cage (222).

11. Porte-satellites (213) selon l'une des revendications précédentes, dans lequel les moyens de fixation sont des vis et les trous de fixation sont taraudés pour recevoir par vissage les vis.

12. Réducteur de vitesse (10) pour une turbomachine (1) d'aéronef, ce réducteur (10) ayant un axe principal et comportant :
- un porte-satellites (213) selon l'une des revendications précédentes,
- un solaire (11) disposé dans la cavité interne de la cage (220) et qui est centré sur l'axe (X),
- des satellites (12) disposés dans la cavité interne autour de l'axe (X) et du solaire (11) et engrenés avec le solaire (11), ces satellites (12) étant centrés et guidés par des paliers (8) dont des extrémités axiales sont montées dans les ouvertures (292) précitées des parois, et
- une couronne (14) disposée autour de l'axe (X) et de la cage (220) et engrenée avec les satellites (12).

13. Turbomachine (1), en particulier d'aéronef, comportant un réducteur (10) selon la revendication précédente.

## Patentansprüche

1. Satellitenträger (213) für ein Untersetzungsgetriebe (10) eines Turbotriebwerks (1), wobei dieser Satellitenträger (213) umfasst:
- einen Käfigträger (222) mit Hauptachse (X) und einen Kupplungsabschnitt (222a) umfassend, der auf dieser Achse (X) zentriert ist und der axiale Käfigstützfinger (282) aufweist, die um die Achse (X) herum verteilt sind,
- einen Käfig (220), der auf der Achse (X) zentriert ist und zwei radial ringförmige Wände (236, 238) umfasst, die durch Brücken (240a1, 240b1) miteinander verbunden sind, die um die Achse (X) herum verteilt sind, wobei die Brücken (240a1, 240b1) sich auf dem externen Umfang der Wände (236, 238) befinden und mit den Wänden (236, 238) einen internen Hohlraum des Käfigs (220) abgrenzen, wobei die Brücken (240a1, 240b1) axiale Aufnahmen (280) umfassen oder definieren, in denen die Finger (282) montiert sind, wobei die Finger (282) über Verbindungen mit den Brücken (240a1, 240b1) verbunden sind, die mindestens einen Freiheitsgrad gestatten, wobei eine der Wände (236) axial durchgehende Öffnungen (292) umfasst, die axial mit den axial durchgehenden Öffnungen (292) der anderen der Wände ausgerichtet sind,
**dadurch gekennzeichnet, dass** der Käfig (220) zwei Stücke (220a, 220b) umfasst:
- ein erstes Stück (220a), das eine der Wände (236) und die Brücken (240a1, 240b1) umfasst, wobei diese Brücken (240a1, 240b1) auf einer Fläche (236a) dieser Wand (236) axial hervorstehen und erste axiale Enden (293), die mit dieser Fläche (236a) verbunden sind, und zweite freie axiale Enden (294) umfassen, und
- ein zweites Stück (220b), das die andere der Wände (238) umfasst, wobei diese Wand (238) eine Fläche (238a) umfasst, auf der die freien Enden (294) der Brücken (240a1, 240b1) angewendet werden,
und dadurch, dass die zwei Stücke (220a, 220b) des Käfigs (220) untereinander durch Befestigungsmittel (299) befestigt sind, die durch die Wand (238) des zweiten Stücks (220b) hindurchgehen und in Befestigungslöcher (296) der Brücken (240a1, 240b1) eingeführt werden.

2. Satellitenträger (213) nach Anspruch 1, wobei mindestens eins der Stücke (220a, 220b) des Käfigs (220) Zentrierelemente für das andere der Stücke umfasst, um eine Zentrierung der Stücke in Bezug aufeinander und auf die Achse (X) zu gewährleisten.

3. Satellitenträger (213) nach Anspruch 2, wobei die Zentrierelemente gekrümmte Ränder (297) umfassen, die durch eins der Stücke (220a, 220b) getragen werden und die sich um die Achse (X) herum erstrecken, wobei diese gekrümmten Ränder (297) mit den gekrümmten Oberflächen (298) des anderen der Stücke zusammenwirken.

4. Satellitenträger (213) nach Anspruch 3, wobei die gekrümmten Ränder (297) Vorsprünge sind, die sich axial hervorstehend erstrecken.

5. Satellitenträger (213) nach Anspruch 3 oder 4, wobei die gekrümmten Ränder (297) in der Lage sind, durch axiales Gleiten oder radiales Anliegen mit den gekrümmten Oberflächen zusammenzuwirken.

6. Satellitenträger (213) nach einem der Ansprüche 2 bis 5, wobei das erste Stück (220a) Zentrierelemente umfasst, die sich auf den freien Enden (294) der Brücken (240a1, 240b1) an deren radial internen und/oder externen Enden befinden.

7. Satellitenträger (213) nach einem der Ansprüche 2 bis 6, wobei das zweite Stück (220b) Zentrierelemente umfasst, die sich auf der Fläche (238b) seiner Wand (238) befinden.

8. Satellitenträger (213) nach einem der vorstehenden Ansprüche, wobei das freie Ende (294) von jeder der Brücken (240a1, 240b1) eine Anlagefläche an die vorher genannte Fläche (238b) der Wand (238) des zweiten Stücks (220b) umfasst, wobei die Aufnahme (280) von jeder Brücke (240a1, 240b1) auf dieser Anlagefläche mündet und die Befestigungsbohrungen (296) der Brücken (240a1, 240b1) um die Mündung dieser Aufnahme (280) herum verteilt sind.

9. Satellitenträger (213) nach einem der vorstehenden Ansprüche, wobei die Wand (238) des zweiten Stücks (220b) axiale Löcher umfassen, die durch die Wand (238) hindurchgehen und mit den Aufnahmen (280) der Brücken (240a1, 240b1) ausgerichtet sind, wobei die Wand (238) des zweiten Stücks (220b) axiale Bohrungen (295) umfasst, die von den Befestigungsmitteln (299) durchquert werden und die um diese Löcher herum verteilt sind.

10. Satellitenträger (213) nach einem der vorstehenden Ansprüche, wobei sich das erste Stück (220a) auf der Seite des Kupplungsabschnitts (222a) des Käfigträgers (222) befindet.

11. Satellitenträger (213) nach einem der vorstehenden Ansprüche, wobei die Befestigungsmittel Schrauben sind und die Befestigungslöcher mit einem Gewinde versehen sind, um die Schrauben durch Verschraubung aufzunehmen.

12. Untersetzungsgetriebe (10) für ein Turbotriebwerk (1) eines Luftfahrzeugs, wobei dieses Getriebe (10) eine Hauptachse aufweist und Folgendes umfasst:
- einen Satellitenträger (213) nach einem der vorstehenden Ansprüche,
- ein Sonnenrad (11), das in dem internen Hohlraum des Käfigs (220) angeordnet ist und auf der Achse (X) zentriert ist,
- Satelliten (12), die in dem internen Hohlraum um die Achse (X) und das Sonnenrad (11) herum angeordnet sind und mit dem Sonnenrad (11) in Eingriff vorliegen, wobei diese Satelliten (12) durch Lager (8) zentriert und geführt werden, von denen die axialen Enden in den zuvor genannten Öffnungen (292) der Wände montiert sind, und
- eine Krone (14), die um die Achse (X) und den Käfig (220) herum angeordnet ist und mit den Satelliten (12) in Eingriff vorliegt.

13. Turbotriebwerk (1), insbesondere eines Luftfahrzeugs, das ein Getriebe (10) nach dem vorstehenden Anspruch umfasst.

## Claims

1. A planet carrier (213) for a speed reducer (10) of an aircraft turbomachine (1), this planet carrier (213) comprising:
- a cage carrier (222) with a main axis (X) and comprising a coupling segment (222a) centred on this axis (X) and which has axial cage support fingers (282) distributed around the axis (X),
- a cage (220) centred on the axis (X) and comprising two radial annular walls (236, 238) connected to each other by bridges (240a1, 240b1) distributed around the axis (X), the bridges (240a1, 240b1) being located at the external periphery of the walls (236, 238) and delimiting with the walls (236, 238) an internal cavity of the cage (220), the bridges (240a1, 240b1) comprising or defining axial housings (280) in which the fingers (282) are mounted, the fingers (282) being connected to the bridges (240a1, 240b1) by connections allowing at least one degree of freedom, one of the walls (236) comprising axially through openings (292) which are axially aligned with axially through openings (292) of the other of the walls,
**characterised in that** the cage (220) comprises two parts (220a, 220b):
- a first part (220a) comprising one of the walls (236) and the bridges (240a1, 240b1), these bridges (240a1, 240b1) projecting axially from a face (236a) of this wall (236) and comprising first axial ends (293) connected to this face (236a) and second free axial ends (294), and
- a second part (220b) comprising the other of the walls (238), this wall (238) comprising a face (238a) to which the free ends (294) of the bridges (240a1, 240b1) are applied,
and **in that** the two parts (220a, 220b) of the cage (220) are attached together by attachment means (299) which pass through the wall (238) of the second part (220b) and are inserted in attachment holes (296) in the bridges (240a1, 240b1).

2. The planet carrier (213) according to claim 1, wherein at least one of the parts (220a, 220b) of the cage (220) comprises members for centring the parts, in order to ensure a centring of the parts with respect to each other and on the axis (X).

3. The planet carrier (213) as claimed in claim 2, wherein the centring members comprise curved edges (297) which are carried by one of the parts (220a, 220b) and which extend around the axis (X), these curved edges (297) cooperating with curved surfaces (298) of the other of the parts.

4. The planet carrier (213) as claimed in claim 3, wherein the curved edges (297) are protuberances which project axially.

5. The planet carrier (213) as claimed in claim 3 or 4, wherein said curved edges (297) are suitable to axially engage by sliding or to radial abutment with the curved surfaces.

6. The planet carrier (213) according to one of claims 2 to 5, wherein the first part (220a) comprises centring members which are located on the free ends (294) of the bridges (240a1, 240b1), at their radially internal and/or external ends.

7. The planet carrier (213) according to one of claims 2 to 6, wherein the second part (220b) comprises centring members which are located on said face (238b) of its wall (238).

8. The planet carrier (213) according to one of the preceding claims, wherein the free end (294) of each of the bridges (240a1, 240b1) comprises a face bearing on the aforementioned face (238b) of the wall (238) of the second part (220b), the housing (280) of each bridge (240a1, 240b1) opening onto this bearing face, and said orifices (296) for attaching the bridges (240a1, 240b1) being distributed around the opening of this housing (280).

9. The planet carrier (213) according to one of the preceding claims, wherein the wall (238) of the second part (220b) comprises axial holes which pass through the wall (238) and are aligned with the housings (280) of the bridges (240a1, 240b1), the wall (238) of the second part (220b) comprising axial orifices (295) through which the attachment means (299) pass and which are distributed around these holes.

10. The planet carrier (213) according to one of the preceding claims, wherein the first part (220a) is located on the side of the coupling segment (222a) of the cage carrier (222).

11. The planet carrier (213) according to one of the preceding claims, wherein the attachment means are screws and the attachment holes are tapped to receive the screws by screwing.

12. A speed reducer (10) for an aircraft turbomachine (1), this reducer (10) having a main axis and comprising:
- a planet carrier (213) according to one of the preceding claims,
- a sun gear (11) located in the internal cavity of the cage (220) and centred on the axis (X),
- planet gears (12) arranged in the internal cavity around the axis (X) and the sun gear (11) and meshed with the sun gear (11), these planet gears (12) being centred and guided by bearings (8), the axial ends of which are mounted in the aforementioned openings (292) in the walls, and
- a ring gear (14) arranged around the axis (X) and the cage (220) and meshed with the planet gears (12).

13. A turbomachine (1), in particular for an aircraft, comprising a reducer (10) according to the preceding claim.
